# EUROPEAN PATENT APPLICATION

(11) **EP 1 621 800 A2**
(43) Date of publication of application: **01.02.2006**
(21) Application number: 05254174.5
(22) Date of filing: 04.07.2005
(51) Int. Cl.: F16H 48/30

(54) **Differential with torque vectoring capabilities**

(30) Priority: 29.07.2004 US 901657; 28.01.2005 US 45243; 28.01.2005 US 45244
(71) Applicant: THE TIMKEN COMPANY, Canton, OH 44706-0930 (US)
(72) Inventor: Gradu, Mircea, Massillon Ohio 44646 (US)
(74) Representative: Marles, Alan David

(57) **Abstract**

A differential (A) for selectively vectoring torque to left and right axle shafts (2,4) that rotate about an axis (X) includes a cage (20) that rotates about the axis (X) as a consequence of torque applied to it. The cage (20) contains gearing that transfers the torque to the axle shafts (2,4) while accommodating for variances in angular velocity between the axle shafts (2,4). In addition, the differential (A) has left and right torque diverters (32,34) for the left and right axle shafts (2,4), with each torque diverter (32,34) including a planetary set (36) connected between the cage (20) and its axle shaft (2,4) and a brake (40) which imparts a reactive torque to its planetary set (36), so that the planetary set (36) diverts torque from the cage (20) through the planetary set (36) to its axle shaft (2,4). The brakes (36), which are preferably magnetic particle brakes, control the torque delivered to the axle shafts (2,4), so the differential (A) has the capacity to vector the torque applied to its cage (20).

## Description

This invention relates in general to differentials for automotive vehicles and, more particularly, to a differential that vectors the torque transferred through it and to a process for vectoring torque in a differential.

When a wheeled automotive vehicle negotiates a turn, the wheels at the outside of the turn rotate faster than the wheels at the inside of the turn. A differential between the drive wheels on each side of the vehicle compensates for the variance in speed between the two drive wheels, but a conventional differential divides the torque generally evenly between those drive wheels. However, for optimum control of the vehicle the drive wheel on the outside of the turn should deliver more torque than the corresponding drive wheel on the inside of the turn. In effect, the increased torque applied to the drive wheel on the outside of the turn helps propel and steer the vehicle around the turn, and this is particularly beneficial in turns negotiated at high speeds.

Moreover, traction may vary between the drive wheels at opposite ends of the differential. If the traction under one of the drive wheels is poor enough, such as on ice, the differential distributes the torque such that the wheel simply spins, while the other wheel with better traction remains at rest. To be sure, limited-slip differentials exist, but that type of differential tends to bring both drive wheels to the same velocity. Where traction is good, this characteristic of limited-slip differentials detracts from the handling of a vehicle negotiating turns at high speeds.

### BRIEF DESCRIPTION OF THE SEVERAL VIEWS OF THE DRAWINGS

Fig. 1 is a sectional view of a differential constructed in accordance with and embodying the present invention;
Fig. 2 is a fragmentary sectional view taken along line 2-2 of Fig. 1.
Fig. 3 is a kinematic diagram of the differential;
Fig. 4 is kinematic diagram of the differential showing the flow path of torque with its torque vectoring diverters inactivate; and
Fig. 5 is a kinematic diagram of the differential showing the flow of torque with its left torque vectoring diverter activated.
Fig. 6 is a sectional view of a modified differential;
Fig. 7 is a kinematic diagram showing the flow of torque in the modified differential of Fig. 6 with left torque vectoring diverter activated;
Fig. 8 is a sectional view of another modified differential;
Fig. 9 is a kinematic diagram of the differential of Fig. 8;
Fig. 10 is a kinematic diagram of the differential of Fig. 8 showing the flow path of torque with its torque vectoring diverters inactivated; and
Fig. 11 is a kinematic diagram of the differential of Fig. 8 showing the flow of torque with its left torque vectoring diverter activated.

### DETAILED DESCRIPTION OF THE INVENTION

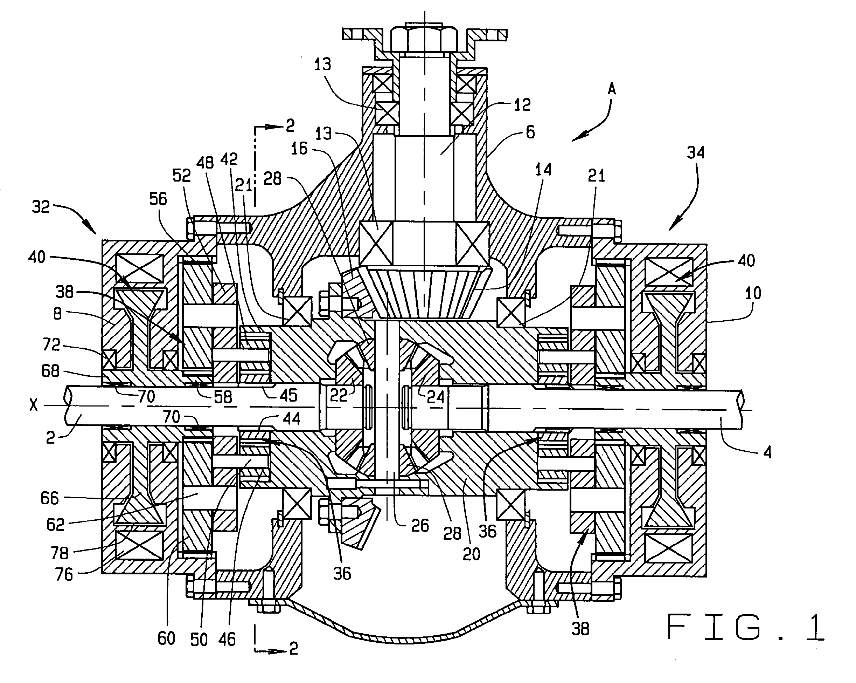

Referring now to the drawings, a differential A (Figs. 1-5) for an automotive vehicle distributes torque produced by the engine of the vehicle to two axle shafts 2 and 4 which rotate about a major axis X and are coupled to road wheels located, respectively, at the left and right sides of the vehicle. The differential A has the capacity to selectively vector the torque delivered to the two shafts 2 and 4, so that one of the shafts 2 or 4 may transfer greater torque than the other. This enhances control of the vehicle.

The differential A includes a housing 6 which contains the working components of the device and includes a left and right end closures 8 and 10. The left axle shaft 2 projects out of the left closure 2, whereas the right axle shaft 4 projects out of the right closure 10.

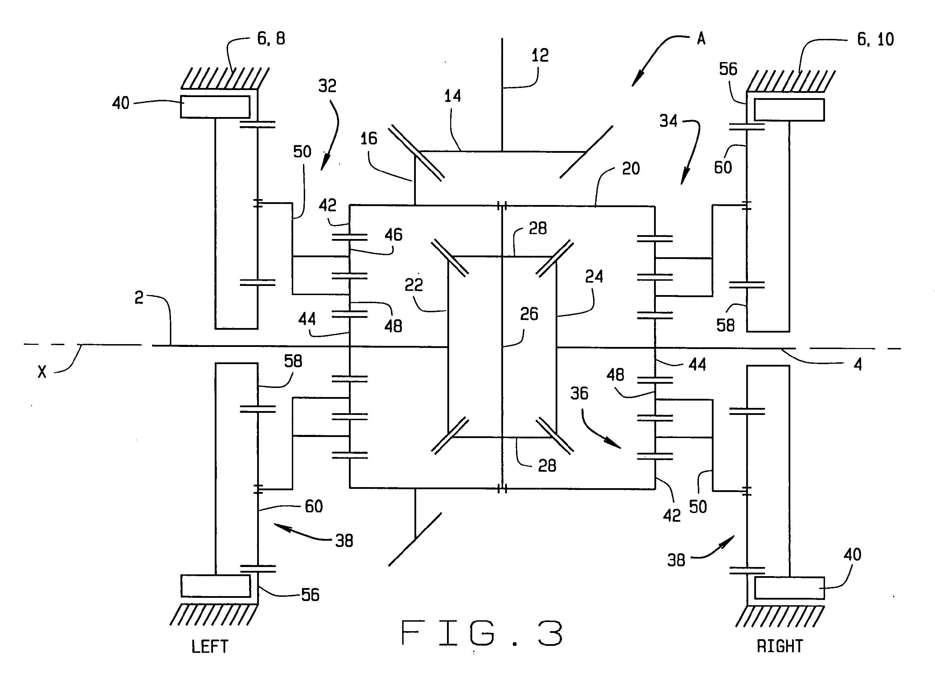

The differential A can function as a conventional differential and often does. To this end, it has (Figs. 1 & 3) a pinion shaft 12 that rotates in the housing 6 on bearings 13. The pinion shaft 12 carries a beveled drive pinion 14 at its inner end. The opposite or outer end of the pinion shaft 12 is coupled with the engine of the vehicle through the transmission of the vehicle. The pinion 14 meshes with a beveled ring gear 16 which is bolted firmly to a differential case or cage 20 that rotates about the axis X on bearings 21 located between the cage 20 and the housing 10. The cage 20 contains gearing in the form of left and right beveled side gears 22 and 24 which are capable of rotating in the cage 20 and also with the cage 20 about the axis X. The left gear 22 is coupled to the left axle shaft 2, while the right gear 24 is coupled to the right axle shaft 4. In addition to the two side gears 22 and 24, the cage 20 carries a cross pin 26, the axis of which is perpendicular to the axis X. The cross pin 26 is fitted with a pair of intervening beveled pinions 28 which mesh with the left and right side gears 22 and 24 and are also part of the gearing.

Thus, when the engine applies torque to and rotates the pinion shaft 12, the pinion 14 on it rotates the ring gear 16 and the cage 20 to which it is secured. The cage 20 in turn causes the cross pin 26 to revolve about the axis X, and the revolving cross pin 26 causes the beveled pinions 28 that are on it to orbit about the axis X. The orbiting beveled pinions 28, being engaged with the left and right side gears 22 and 24, rotate those gears which in turn rotate the axle shafts 2 and 4. Should one of the axle shafts 2 or 4 rotate faster than the other, as when negotiating a turn, the beveled pinions 28 will rotate on the cross shaft 26, but will still transfer torque to the left and right side gears 22 and 24 and to the axle shafts 2 and 4 to which the gears 22 and 24 are connected.

But the differential A also has the capacity to vector torque between the two axle shafts 2 and 4, that is to say, to selectively distribute the torque that is applied at the pinion shaft 12 between the two axle shafts 2 and 4. To this end, the differential A is equipped with (Figs. 1 & 3) a left torque diverter 32 and a right torque diverter 34, which are located within the housing 4 at the left enclosure 8 and right enclosure 10, respectively, of the housing 6. The left torque diverter 32, when energized, is capable of diverting additional torque from the ring gear 16 to the left axle shaft 2. The right torque diverter 34, when energized, is capable of diverting additional torque from the ring gear 16 to the right axle shaft 4. Each torque diverter 32 and 34 basically includes a primary planetary set 36, a secondary planetary set 38, and a magnetic particle brake 40.

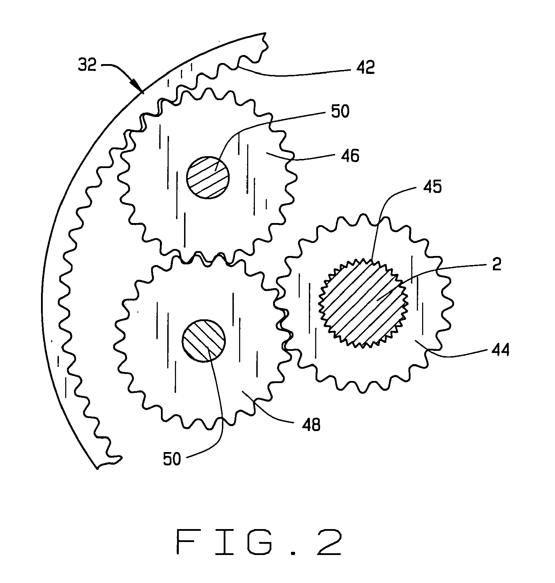

The primary planetary set 36 of each diverter 32 and 34 has a ring gear 42 that is attached to the cage 20. Indeed, it may be formed integral with the cage 20. The primary set 36 also includes a sun gear 44 coupled through a spline 45 with that axle shaft 2 or 4 that extends from its end of the cage 20. Thus, the sun gear 44 for the primary planetary set 36 of the left diverter 32 is connected to the left axle shaft 2 and to the left beveled gear 22 in the cage 20, as well, all such that the sun gear 44, the beveled gear 22 and the axle shaft 2 rotate in unison at the same angular velocity. The sun gear 44 for the primary planetary set 36 of the right diverter 34 is connected to the right axle shaft 4 and to the right beveled gear 24, such that all three rotate in unison at the same angular velocity. Each primary planetary set 36 also has (Fig. 2) planet gears 46 and 48 located between its ring gear 42 and its sun gear 44. They rotate about pins 50 which form part of a carrier 52. The planet gears 46 mesh with the ring gear 42, but not the sun gear 44, whereas the planet gears 48 mesh with the sun gear 44 but not the ring gear 42. Moreover, the planet gears 46 and 48 are arranged in pairs, with the planet gears 46 and 48 of each pair meshing with each other. As a consequence, any torque transferred from the ring gear 42 to the sun gear 44 imparts rotation to the shaft 2 or 4 in the direction of rotation for the cage 20. This enables the pitch diameters of the ring gear 42 and sun gear 44 to be somewhat similar, although with that of the sun gear 44 being smaller than that of the ring gear 42, and this, in turn, enables the sun gear 44 and its axle shaft 2 or 4 to overspeed with respect to the ring gear 42 and cage 20.

Each secondary planetary set 38 has a ring gear 56 attached to the closure 8 or 10 at its end of the cage 20, such that it does not rotate with respect to the housing 6. Indeed, the ring gears 56 may be formed integral with the end closures 8 and 10. Each secondary set 38 also includes a sun gear 58 connected to the magnetic particle brake 40 for its diverter 32 or 34. In addition, the secondary planetary set 38 has planet gears 60 which are located between and engaged with the ring gear 56 and the sun gear 58. The secondary planetary set 38 shares the carrier 52 with its primary set 36, in that the carrier 52 has additional pins 62 which provide parallel axes about which the planet gears 60 of the secondary set 38 rotate. In that sense, the carrier 52 couples the two planetary sets 36 and 38.

The magnetic particle brake 40 for the left torque diverter 32 lies within the left closure 8 for the housing 6, whereas the magnetic particle brake 40 for the right torque diverter 34 lies within the right closure 10. Each brake 40 includes a rotor 66 having a hub 68 that rotates on the axle shaft 2 or 4 that extends through the end closure 8 or 10 in which the brake 40 is located. Indeed, the sleeve hub 68 and shaft 2 or 4 rotate relative to each other on needle bearings 70 located between them. Actually, the sun gear 58 for the secondary set 38 of each diverter 32 and 34 may be formed integral with the hub 68 for the brake 40 of that diverter 32 or 34. The hub 68, in turn, rotates in bearing 72 located between it and the closure 8 or 10 within which it is located. Much of the rotor 66 lies radially beyond its hub 68. Each brake 40 also includes an electrical coil 76 that is embedded in its end closure 8 or 10, and it encircles the rotor 66. The end closure 8 or 10 and the coil 76 embedded within it form the stator for the brake 40. A small annular gap exists around the periphery of the rotor 66 between it and the coil 76, and this gap contains particles 78 that are capable of being magnetized.

When the coil 76 is energized, the brake 40 resists rotation of the rotor 66 and likewise rotation of the sun gear 58 that is on the sleeve 68 of the rotor 66. The torque applied to the rotor 66 varies almost linearly with the current, and as a consequence the two brakes 40 are easily controlled as are the torque diverters 32 and 34 of which they are a part.

Basically, the magnetic particle brake 40 for each torque diverter 34, 36 lies between the sun gear 58 of the secondary planetary set 38 for the diverter 34 or 36 and the housing 10. When applied, it resists rotation of the sun gear 58, but the sun gear 58 continues to rotate despite the resistance. When fully de-energized, the magnetic particle brake 40 offers essentially no resistance to the sun gear 58 and the planet gears 60 simply rotate and orbit between the ring gear 52 and sun gear 58. The carrier 52 rotates and the planet gears 46 of the primary planetary set 38 orbit as well.

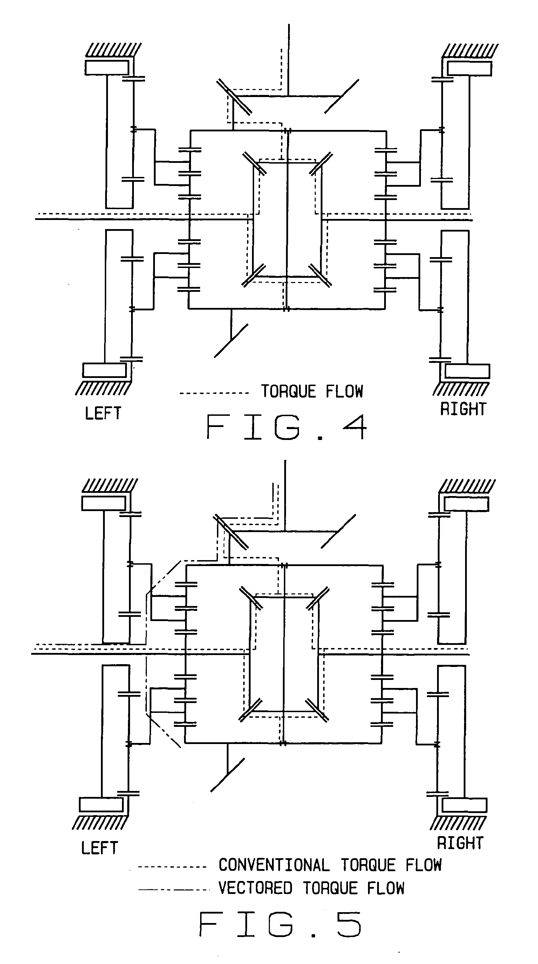

Normally, the differential A operates with both of its magnetic particle brakes 40 de-energized, and this holds particularly true when the vehicle travels straight. Under these circumstances the torque supplied at the pinion shaft 12 is divided equally between the left and right axle shafts 2 and 4 and the road wheels that they drive. This does not differ from a conventional differential. Indeed, the differential A operates essentially as a conventional differential, with all of the torque and power passing (Fig. 4) from the ring gear 16 to the differential cage 20 and thence to the cross pin 26. While the cross pin 26 revolves around the axis X, the beveled pinions 28 do not rotate on the cross pin 26. They simply turn the left and right beveled side gears 22 and 24 at the velocity of the cage 20 and cross pin 26, and the beveled side gears 22 and 24 rotate the axle shafts 2 and 4, respectively, at the same angular velocity. With the brakes 40 fully released the left and right torque diverters 32 and 34 transfer no torque of any consequence and otherwise do not affect the operation of the differential A.

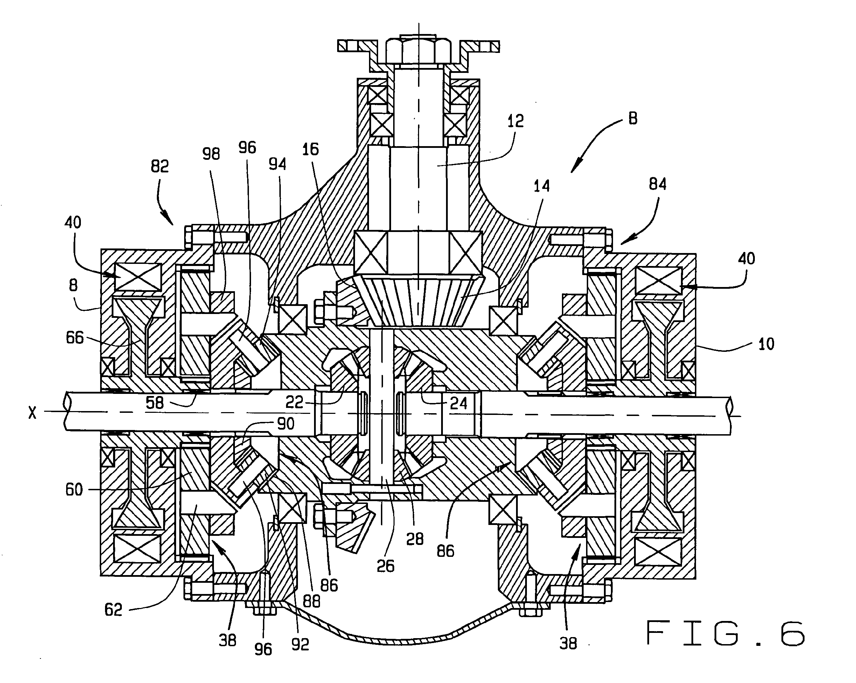

However, when the vehicle enters a turn, particularly at high speed, the magnetic particle brake 40 for the diverter 32 or 34 that is dedicated to the wheel on the outside of the turn should be energized to vector the torque such that more is delivered to that wheel. When the brake 40 of the diverter 32 or 34 for the axle shaft 2 or 4 on the outside of the turn is energized and the brake 40 thus applied, it seeks to resist rotation of the sun gear 58 in the secondary planetary set 38 of that diverter 32 or 34. The sun gear 58 in turn seeks to restrain orbiting of the planet gears 60, and they in turn seek to impede rotation of the carrier 52. If the brake 40 were fully released, the planet gears 46 and 48 of the primary planetary set 36 would simply spin freely between the beveled ring gear 42 and sun gear 44 of the set 36, but as a consequence of the restraint exerted on the carrier 52 by the brake 40, a reactive torque is applied to the orbiting planet gears 46 and 48 of the primary set 36. This causes the gears 46 and 48 to divert torque, the torque flow being (Fig. 5) from the cage 20 and ring gear 42, through the planet gears 46 and 48 to the sun gear 44 and thence into the axle shaft 2 or 4. The greater the braking effort exerted by the brake 40, the greater the diversion of torque.

The extent to which either brake 40 is applied depends on a number of conditions, all of which may be monitored by sensors on the vehicle and processed through a processor to control the current which operates the magnetic particle brakes 40. Among the conditions monitored are the speed of the vehicle, rate of yaw, the lateral and longitudinal acceleration of the vehicle, the steering angle, the wheel slip, engine and transmission operating parameters, and the temperature of the brakes 40, to name some.

For example, if the vehicle enters a right turn, the road wheel and axle shaft 2 on the left side of the vehicle will rotate faster than the road wheel and axle shaft 4 on the right side of the vehicle. The brake 40 of the left diverter 32 is energized to resist rotation of the sun gear 58 in the secondary planetary set 38. The planet gears 60 of the secondary set 38 likewise experience the resistance to rotation as does the carrier 52. In effect, the secondary planetary set 38 serves as a torque multiplier, exerting considerably more torque on the carrier 52 than the brake 40 exerts on the sun gear 52. The planet gears 46 and 48 of the primary set 36, instead of idling freely between the ring gear 42 and sun gear 44 of that set, now, owing to the resistance to orbiting exerted by the carrier 52, divert torque from the cage 20 to the sun gear 58 and the left axle shaft 2, so that more torque is applied to the left axle shaft 2 than to the right axle shaft 4 (Fig. 5). In other words, the ring gear 42, through the planet gears 46 and 48, actually drives the sun gear 44 and the left axle shaft 2 to which it is connected at the greater velocity of the axle shaft 2. Thus, the left diverter 32, in effect, functions as an overspeed mechanism for the left axle shaft 2.

Slippage occurs within the brake 40 of the left diverter 32. Generally speaking, the greater the resistance to rotation imposed by the brake 40, the greater the torque transferred through the left diverter 32 to the left axle shaft 2. While the brake 40 of the left diverter 32 may be energized in a right turn, the brake 40 at the right diverter 34 is not.

When negotiating a left turn, the magnetic particle brake 40 of the right diverter 34 is applied in a like manner, while the brake 40 of the left diverter 32 remains fully released. Thus, additional torque transfers to the right axle shaft 4.

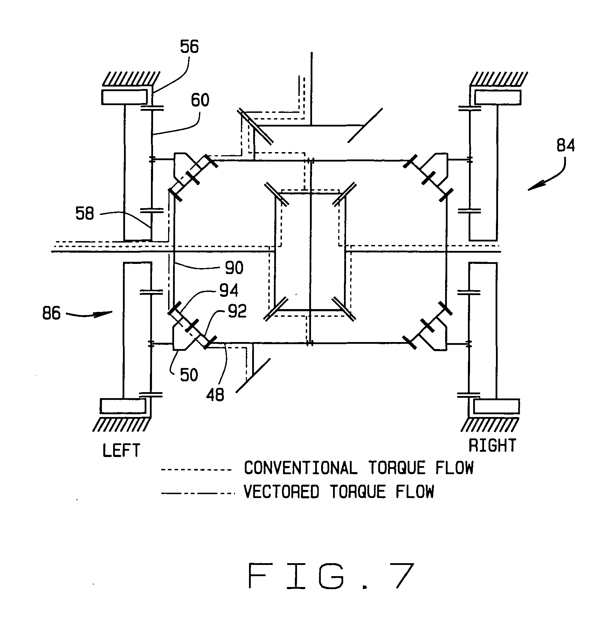

A modified differential B (Figs. 6 & 7) is similar to the differential A, but utilizes left and right torque diverters 82 and 84 that differ slightly from the diverters 32 and 34 in differential A. To be sure, each torque diverter 82 and 84 in the differential B has a secondary planetary set 38 and a magnetic particle brake 40. The differences reside in a primary planetary set 86 which is interposed between the cage 20 and the secondary planetary set 38.

The primary planetary set 86 for each torque diverter 82 and 84 includes (Fig. 6) a beveled ring gear 88 on the cage 20 and a beveled sun gear 90 on the shaft 2 or 4. The ring gears 88 encircle the axle shafts 2 and 4 and rotates with the cage 20 at the speed of the cage 20, whereas the sun gears 90 are coupled to that axle shafts 2 and 4 through splines. Between each ring gear 88 and its sun gear 90 are planet gears 92 and 94 which are arranged in pairs, there being a planet gear 92 and a planet gear 94 in each pair. The planet gears 92 and 94 rotate about pins 96 which project from a carrier 98, the very same carrier from which the pins 62 for the secondary planetary set 38 project, but are oblique to the axis X. The planetary gears 92 mesh with the ring gear 88, but not with the sun gear 90. The planetary gears 94 mesh with the sun gear 90, but not with ring gear 88. The planetary gears 92 and 94 of each pair mesh with each other.

The differential B operates essentially the same as the differential A. When the vehicle travels straight, the brakes 40 of both torque diverters 82 and 84 are released, that is to say their coils 76 carry no current. As a consequence, the differential B operates essentially as a conventional differential, in which event the sun gear 90 of each primary planetary set 86 rotates at the speed of the cage 20 and the planet gears 92 and 94 simply orbit without rotating about their pins 96. The planet gears 60 of the secondary set 38, being carried around the axis X by the carrier 98, will orbit and will further rotate, driving the sun gear 58 and the brake rotor 66 that is connected to it. Should the vehicle enter a right turn, the left axle shaft 2 on the outside of the turn will rotate faster than the cage 20, so the planet gears 92 and 94 in the primary planetary set 86 in the left diverter 82 will rotate between the ring gear 88 and the sun gear 90. If the brake 40 for the left diverter 82 is energized, more torque will flow to the left axle shaft 2. A similar sequence occurs for a left turn, with more torque flowing through the right diverter 84 to the right axle shaft 4.

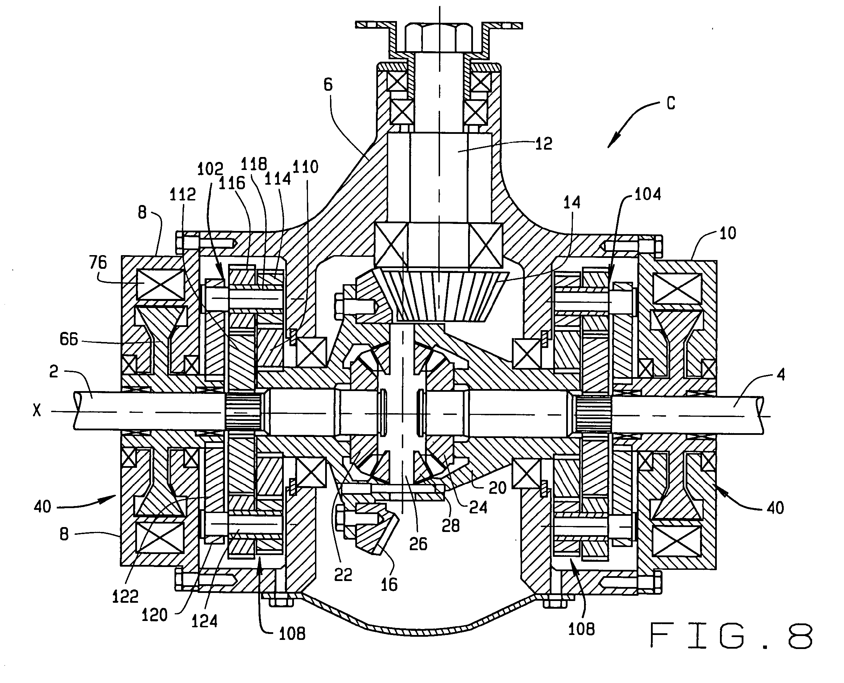

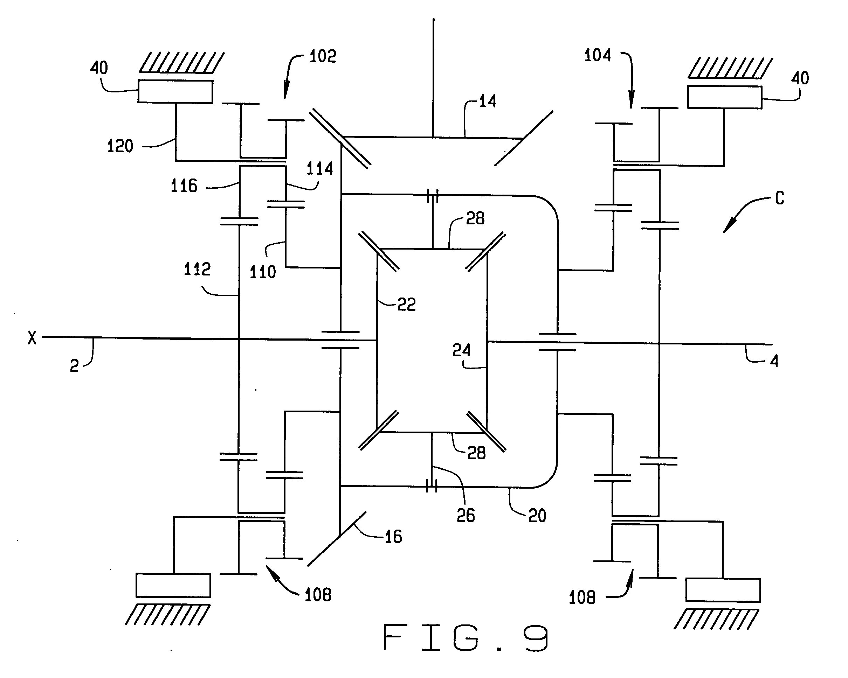

Another modified differential C (Figs. 8-11) utilizes torque diverters 102 and 104 that differ from their counterparts 32 and 34 in the differential A and their counterparts 82 and 84 in the differential B, yet each includes a magnetic particle brake 40. The differential C also includes a planetary set 108 that possesses a double planet configuration.

Considering the planetary set 108 for the left diverter 102 in more detail, it includes (Fig. 8) an inner sun gear 110 that is fitted to the cage 20 with mating splines where the left axle shaft 2 emerges from the cage 20, so that the inner sun gear 110 rotates with the cage 20 at the angular velocity of the cage 20. In addition, the planetary set 108 has an outer sun gear 112 that is fitted to the left axle shaft 2 with more mating splines adjacent to both the end of the cage 20 and the inner sun gear 110 at that end. Thus, the outer sun gear 112 rotates with the left axle shaft 2 at the angular velocity of the left shaft 2. The two sun gears 110 and 112 mesh with planet gears 114 and 116, respectively, which are arranged in pairs around the sun gears 110 and 112, with the planet gears 114 and 116 of each pair being fitted to a common sleeve 118 that extends through the gears 114 and 116 such that the gears 114 and 116 are united in the sense that they cannot rotate independently of each other. Thus, the planet gears 114 and 116 of each pair rotate together at the same angular velocity. Completing the planetary set 108 is a carrier 102 including a flange 122 and pins 124 which project from the flange 122 into the sleeves 118 that unite the planet gears 114 and 116. The flange 122 fits over the hub 68 of the left brake 40, to which it is coupled with mating splines. The pins 124 establish axes about which the pairs of planet gears 114 and 116 rotate.

When the coil 76 of the brake 40 for the left diverter 102 is energized, it exerts a reactive torque on the rotor 66 for that brake 40, and that torque resists rotation of the rotor 66. The carrier 120 of the planetary set 108 for the left diverter 32, being coupled at its flange 122 to the rotor 66, likewise experiences a resistance to rotation, and as a consequence, the planet gears 114 and 116 do not orbit freely about their respective sun gears 110 and 112. This causes them to divert more torque to the left axle shaft 2.

The right torque diverter 104 has essentially the same construction as the left torque diverter 102, only it is located at the other end of the cage 20. Its planetary set 108 and brake 40 do not differ from their counterparts in the left torque diverter 104.

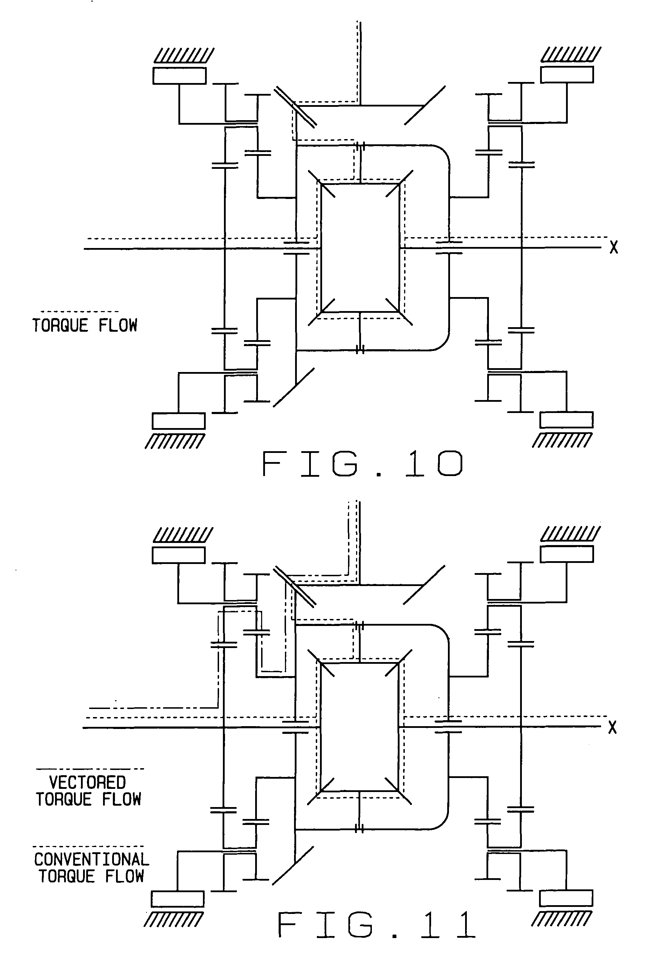

Normally, the differential C operates with both of its magnetic particle brakes 40 de-energized ― that is to say ― released, and this holds particularly true when the vehicle travels straight with good traction at both drive wheels. Under these circumstances the torque supplied at the pinion shaft 12 is divided equally between the left and right axle shafts 2 and 4 and the road wheels that they drive. With the brakes 40 fully released the left and right torque diverters 102 and 104 transfer no torque of any consequence and otherwise do not affect the operation of the differential C. The two sun gears 110 and 112 of each planetary set 108 rotate at the same angular velocity with the cage 20 and left and right axle shafts 2 and 4, respectively. The planet gears 114 and 116 of each planetary set 108 orbit about the axis X at the angular velocity imparted to their sun gears 114 and 116, but do not rotate on their pins 124. As a consequence of the pins 124 being carried around by the orbiting planet gears 114 and 116, the two carriers 120 and the rotors 66 of the two brakes 40 revolve about the axis X, also at the angular velocity imparted to the cage 20 and axle shafts 2 and 4. The torque applied to the cage 20 at the ring gear 16 divides evenly between the left and right axle shafts 2 and 4 (Fig. 10).

Should the vehicle enter a right turn, the left drive wheel and its axle shaft 2 will rotate faster than the right drive wheel and its axle shaft 4. As a consequence, the outer sun gear 112, which is on the axle shaft 2, will overspeed with respect to the inner sun gear 110 which is on the cage 20. The speed differential causes the pairs of planet gears 114 and 116 to rotate about their respective pins 114 and in so doing orbit with respect to the two sun gears 110 and 112. They drive the pins 124 around the axis X at a velocity different from the velocities of either of the sun gears 110 and 112, and the carrier 120 revolves about the axis X at the velocity of the orbiting pins 124. Being connected to the carrier 120, the rotor 66 of the brake 40 revolves at the velocity of the carrier 120. Notwithstanding the difference in velocities between the two axle shafts 2 and 4, the torque remains equally divided between the shafts 2 and 4.

Some right turns can be negotiated better when more torque is applied to the left axle shaft 2 than the right axle shaft 4. To distribute the torque accordingly, the brake 40 of the left torque diverter 102 is energized by directing an electrical current through its coil 76. The energized coil 76 resists rotation of the rotor 66 which in turn resists rotation of the carrier 120 for the planetary set 108 in the left diverter 102. The reactive torque applied by the carrier 120 at its pins 124 transfers to the orbiting pairs of planet gears 114 and 116 and they divert torque from the cage 20 through the planetary set 108 of the left diverter 102 to the left axle shaft 2 (Fig. 11). This diverted torque combines with the torque directed in the conventional manner through the cross pin 26, pinions 28, and left side gear 22, so that the left axle shaft 2 delivers more torque than the right axle shaft 4. The reactive torque produced by the brake 40 varies almost linearly with the current directed through its coil 76, so the brake 40 is easily controlled and with it the distribution of torque between the two axle shafts 2 and 4.

Should it become desirable to increase the torque delivered to the right axle shaft 4, as is a left turn, the coil 76 of the brake 40 for the right torque diverter 102 is energized, while the brake 40 of the left diverter 104 remains released. The brake 40 of the right diverter 104 imparts reactive torque to the planetary set 40 of the right diverter 104 in a similar manner with similar results.

The differentials A, B and C may also be used to divert torque to a drive wheel that has the best traction, simply by energizing the magnetic particle brake 40 on the side of the differential A, B or C at which that wheel is located. For example, if the right wheel loses traction on ice and seeks to spin freely, while the left wheel retains relatively good traction, the magnetic particle brake 40 of the left diverter 32, 82, or 102 may be energized to divert more torque to the left axle shaft 2 and the drive wheel to which it is coupled. On the other hand, if both drive wheels experience poor or reduced traction, the magnetic particle brake 40 of both diverters 32 and 34 or 82 and 84 or 102 and 104 should be energized, so that torque is transferred through both diverters to the axle shafts 2 and 4 without having one axle shaft 2 or 4 break loose and spin under slightly reduced traction of the wheel coupled with the shaft.

The ring gear 16 of any of the differentials A, B or C need not be beveled and driven by the beveled drive pinion 14, but instead may be driven by a pinion having its axis parallel to the axis X as in differentials commonly used in front wheel drive vehicles. Moreover, the brakes 40 for developing reactive torques in their corresponding primary planetary sets 36, 86 and 108 may take other forms, such as brakes that rely on friction, fluids, or electrical fields to resist rotation, and they need not operate through secondary planetary sets 38. The axle shafts 2 and 4 need not extend all the way to the wheels, but may terminate at flanges or CV joints located immediately beyond the left and right end closures 8 and 10.

## Claims

1. A differential for distributing torque to left and right axle shafts of an automotive vehicle; said differential comprising:
a cage which rotates about a major axis under torque that is applied;
gearing within the cage for distributing at least some of the torque that is applied to the cage between the axle shafts while accommodating variances in velocity between the axle shafts;
a first planetary set located between the cage and the left axle shaft;
a first brake coupled with the first planetary set such that the first brake, when applied, imparts a reactive torque to the first planetary set, causing the first planetary set to transfer torque between the cage and the left axle shaft;
a second planetary set located between the cage and the right axle shaft; and
a second brake coupled with the second planetary set such that the second brake, when applied, imparts a reactive torque to the second planetary set, causing the second planetary set to transfer torque between the cage and the right axle shaft.

2. A differential according to claim 1 wherein the first and second brakes are magnetic particle brakes.

3. A differential according to claim 1 wherein the first and second planetary sets each include a ring gear connected to the cage, a sun gear connected to its axle shaft, planet gears located between and engaged with the ring and sun gears, and a carrier providing axes about which the planet gears rotate; and wherein the first brake is coupled with the carrier of the first planetary set and the second brake is couples with the carrier of the second planetary set.

4. A differential according to claim 3 wherein the gearing includes first beveled gear which rotates with the first axle shaft about the major axis, a second beveled gear which rotates with the second axle shaft about the major axis, and a third beveled gear that meshes with the first and second beveled gears and is capable of rotating in the cage about an axis that is perpendicular to the major axis.

5. A differential according to claim 3 wherein the ring and sun gears of the first and second planetary sets are beveled gears, and the planetary gears rotate about axes that are oblique to the major axis.

6. A differential according to claim 3 and further comprising: a third planetary set located between the first brake and the first planetary set; and a fourth planetary set located between the second brake and the second planetary set.

7. A differential according to claim 6 wherein the third and fourth planetary sets each include a ring gear, a sun gear, and a planet gear located between and engaged with the ring and sun gears, wherein the ring gears of the third and fourth planetary sets are fixed against rotation; wherein the sun gear of the third planetary set is connected to the first brake; wherein the planet gear of the third planetary set is connected to the carrier for the first planetary set; wherein the sun gear for the fourth planetary set is connected to the second brake; and wherein the planet gear for the fourth planetary set is connected to the carrier for the second planetary set.

8. A differential according to claim 7 wherein the first and second brakes are magnetic particle brakes.

9. A differential according to claim 1 wherein each of the planetary sets includes a sun gear on the cage and another sun gear on the axle shaft to which the planetary set transfers torque.

10. A differential according to claim 9 wherein each planetary set includes planet gears engaged with the sun gears.

11. A differential according to claim 10 wherein the planet gears for each planetary set are arranged in pairs, with each pair including a planet gear engaged with the sun gear on the cage and a planet gear engaged with the sun gear on the axle shaft; and wherein the planet gears of each pair are united so that they will rotate in unison and at the same angular velocity.

12. A differential according to claim 10 wherein the brake for each planetary set applies the reactive torque at the planet gears for the set.

13. A differential according to claim 10 wherein each planetary set further includes a carrier having pins about which the planet gears for the set rotate, and the brake for the planetary set is connected to the carrier, so as to resist rotation of the carrier.

14. A differential according to claim 10 wherein the brake for each planetary set is a magnetic particle brake.

15. A process for vectoring torque in a differential that delivers torque to left and right axle shafts through a cage that contains gearing for transferring torque from the cage to the axle shafts while accommodating variances in velocity between the axle shafts, said process comprising:
diverting torque to the left axle shaft through a left planetary set located between the cage and the left axle shaft when appropriate and at the other times diverting torque to the right axle shaft through a right planetary set when appropriate.

16. The process according to claim 15 wherein each planetary set has a carrier and torque is diverted through the planetary set by resisting rotation of the carrier.

17. A process according to claim 16 wherein the carrier for each planetary set is connected to a magnetic particle brake to resist rotation of the carrier.
